# EUROPEAN PATENT APPLICATION

(11) **EP 3 699 446 A1**
(43) Date of publication of application: **26.08.2020**
(21) Application number: 19158431.7
(22) Date of filing: 21.02.2019
(51) Int. Cl.: F16C 33/58, F16C 33/62, F16C 33/66

(54) **ROLLING BEARING AND WIND TURBINE COMPRISING A ROLLING BEARING**

(71) Applicant: Siemens Gamesa Renewable Energy A/S, 7330 Brande (DK)
(72) Inventor: Rychahivskyy, Andriy, 7400 Herning (DK)
(74) Representative: Aspacher, Karl-Georg

(57) **Abstract**

A rolling bearing (10), in particular for a wind turbine (1), comprising
an inner race (12),
an outer race (14),
a plurality of rolling elements (19) arranged between the inner race (12) and the outer race (14), and
lubricant (18) for lubricating the rolling bearing (10), wherein
the inner race (12) and the outer race (14) each have a bearing surface with a contact zone (15, 28) in contact with the rolling elements (19),
the bearing surface of the inner race (12) and/or the outer race (14) has a portion (16) having a lipophobic surface for repelling the lubricant (18).

The suggested rolling bearing has the advantage that the lubricant in the bearing does not stick to the portion, where it is useless for lubricating the bearing. Therefore, the rolling bearing can have a better lubrication, since the lubricant is directed towards the contact zone, where contact between the races and the rolling elements takes place.

## Description

The present invention relates to a rolling bearing and a wind turbine comprising such a rolling bearing.

Known wind turbines comprise rotors with large diameters and can be very heavy. The rotors are supported in bearings that are able to withstand high loads. Further, in order to optimize the efficiency, such bearings preferably have a low internal friction. To this end, lubricant is used. However, lubricant is only effective when forming a film between the parts of the bearing that are moving relative to each other.

US 8,783,959 B2 describes a bearing cage for a rolling-element bearing having at least one surface with lipophobic and/or oleophobic properties. The lubricant used in the bearing forms a contact angle of at least 90° on the surface having lipophobic and/or oleophobic properties.

It is one object of the present invention to provide an improved rolling bearing, in particular a rolling bearing for use in a wind turbine.

According to a first aspect, a rolling bearing, in particular for a wind turbine, is provided. The rolling bearing comprises an inner race, an outer race, a plurality of rolling elements that are arranged between the inner race and the outer race, and lubricant for lubricating the rolling bearing. The inner race and the outer race each have a bearing surface with a contact zone in contact with the rolling elements. The bearing surface of the inner race and/or the outer race has a portion having a lipophobic surface for repelling the lubricant.

Advantageously, due to the lipophobic surface, the lubricant in the rolling bearing does not stick to the portion, where it cannot lubricate the rolling elements. Therefore, the rolling bearing has an improved lubrication.

An overall rolling resistance or friction of the suggested rolling bearing can be decreased because the lubricant is not lost in areas of the rolling bearing where it has no effect, such as the portion. Particularly in rolling bearings that are employed in devices that have long operation times under permanent constant load, such as in wind turbines, a service interval or a lifetime of the rolling bearing can be increased significantly. This is due to a more efficient lubrication, thus reducing wear of the rolling bearing, in particular the rolling elements and/or the races. Unexpected or pre-mature failure of the rolling bearing or subsequent effects resulting from a bad performance of the rolling bearing can therefore be avoided.

The lubricant, for example oil or grease, is used particularly for reducing friction between the rolling elements and the races. For this, the lubricant preferably forms a thin layer between the elements that are moving relative to each other, that is, the rolling elements and the races. In order to achieve a very low friction, the lubricant preferably behaves as a liquid having a low viscosity, because such liquids cannot transfer large shear forces. However, such liquids may be displaced quickly by a pressure between the rolling elements and the races imposed by a load on the rolling bearing, which is not preferred. Therefore, the lubricant preferably has a certain viscosity.

Thus, depending on the expected operating point of the rolling bearing concerning load and rotational speed, the lubricant can be optimized with regard to parameters as described above. Other parameters that can be of interest are water uptake and/or capacity of wear debris.

The inner race and the outer race, which may be referred to as inner ring and outer ring, respectively, preferably comprise hardened material, such as hardened steel.

The contact zone preferably comprises a very hard surface that has a high resistance to wear. A width of the contact zone depends particularly on a geometry of the rolling elements.

The portion has a lipophobic surface, which means that it repels lipids. This is also called lipophobicity. The portion may also be referred to as being oleophobic. As used herein, lipophobic and oleophobic have the same meaning. The lubricant comprises lipids, such as fat, oil or grease. Thus, the lubricant is repelled by the surface of the portion. Repelling means that an adhesion force between the lubricant and the portion is relatively low, such that lubricant will roll of easily when a tangential force with respect to the surface is applied to the lubricant.

Lipophobicity can be measured, for example, by determining a contact angle between a droplet of the lubricant and the surface of the portion. The contact angle may be defined as the angle that forms between the surface and a tangent on an interface between the droplet and a surrounding phase, for example air, at a boundary line between lubricant and the surrounding phase. Contact angles may be denoted as static, advancing or receding contact angle. Advancing contact angle is obtained when a volume of the droplet is increased during the measurement, that is, the boundary line is moving forward (advancing). Receding contact angle is obtained when the volume of the droplet is reduced during the measurement, that is, the boundary line is moving backward (receding). Static contact angle is obtained when the volume is fixed and after the droplet was allowed to settle. For example, the static contact angle has a value in between the value of the advancing contact angle and the value of the receding contact angle.

A surface is called lipophobic, for example, when the contact angle, preferably the receding contact angle, is larger than 60°, preferably larger than 90°. The contact angle may depend on both the surface properties and the lubricant. For example, the polarity of lubricant molecules is correlated to lipophobicity.

In embodiments, the portion has a surface that is super-lipophobic. This is the case, for example, when the contact angle is larger than 120°.

Lubricant that is pushed from the contact zone to the portion, for example when it is displaced by one of the rolling elements, does not stick to the portion due to the lipophobic property, but returns to the contact zone, where it can help in lubrication of the rolling elements. This is particularly advantageous when the lubricant is grease, which tends to stick to surfaces stronger than oil.

The suggested rolling bearing may be used in any application. Preferably, the rolling bearing is used in applications where high loads need to be supported rotationally.

According to an embodiment, the portion is directly adjacent to the contact zone.

The portion is directly adjacent to the contact zone. This means, that there is no space left between the contact zone and the portion. In embodiments, the portion may be arranged between two contact zones spaced apart by the portion. That is, a number of disjunct contact zones and a number of portions having lipophobic surfaces may be realized.

According to an embodiment, the portion comprises a lipophobic material.

The lipophobic material has a lipophobic surface, providing the mentioned advantages.
According to a further embodiment, the lipophobic surface is formed as a coating.

For example, the coating may comprise a polymer coating, in particular fluoropolymers. Examples are perfluoroalkoxy alkanes, copolymers of tetrafluoroethylene, perfluoroethers, or polytetrafluoroethylene (PTFE).

According to a further embodiment, the portion comprises a microstructured material, in particular a microporous material.

For example, the microstructured material has a microstructured surface, which further allows tuning of the surface properties, such as interaction with various kinds of fluids. In particular, the lipophobic surface properties of the portion can be enhanced by using such material.

According to a further embodiment, a sealing portion for sealing the rolling bearing is arranged between the inner race and the outer race and a surface portion directly adjacent to the sealing portion has a lipophobic surface for repelling the lubricant.

The sealing portion prevents lubricant from escaping the rolling bearing and prevents dust or dirt as well as water or humidity to enter the rolling bearing. The sealing portion comprises a seal or sealing element. By arranging a lipophobic surface next to the sealing portion, less lubricant will accumulate in a space formed between the rolling elements and the sealing portion. This has the advantage that a pressure on the seal caused by lubricant being pushed towards the seal by a rolling element is reduced, because the space is not pre-occupied with lubricant sticking to the surface close to the seal. Sealing performance of the seal is therefore improved, which further enhances service life of the rolling bearing.

According to a further embodiment, the contact zone has a lipophilic surface.
The lipophilic surface may be achieved by applying a lipophilic coating on the contact zone. This embodiment has the advantage that the lubricant preferably sticks to the contact zone. This increases the lubricants efficiency.

For example, a surface is called lipophilic, when a contact angle of the lubricant on the surface is less than 90°, preferably less than 60°.

According to a further embodiment, the rolling elements have a lipophilic surface.

This embodiment further increases the efficiency of the lubricant.

According to a further embodiment, the lubricant is oil.

Preferably, the oil comprises additives for enhancing its properties. Additives are, for example, detergents and dispersants.

According to a further embodiment, the lubricant is grease.

Grease comprises oil and certain additives that give it enhanced properties. Grease can be preferred because it can have better properties at high loads or even static conditions.

According to a further embodiment, the portion comprises a polymeric coating.

Polymeric coatings have the advantage that the polymers may be tuned with respect to their functional groups with ease.

That is, it is possible to implement a variety of different functional groups, in particular as side groups along the polymer backbone, having different functional properties in a polymer. Thus, the polymeric coating can have certain specific properties beside being lipophobic.

According to a further embodiment, the coating is a fluoropolymer coating.

According to a further embodiment, the rolling bearing is implemented as a ball bearing, as a cylindrical rolling bearing, as a spherical rolling bearing and/or as a tapered rolling bearing.

The rolling bearing may further comprise a cage for securing the rolling elements in certain positions. Preferably, the cage has at least partially a lipophobic surface. For example, the cage is made from a lipophobic material or is coated with a lipophobic coating. This ensures that the lubricant does not stick to the cage.

According to a second aspect, a wind turbine is suggested. The wind turbine has a rolling bearing according to the first aspect as a main bearing and/or as a blade bearing.

This wind turbine has the advantage that an efficiency is increased, because friction is reduced. Further, a service-life of the rolling bearing is increased because wear is reduced. Thus, the overall economic efficiency of the wind turbine is significantly increased.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a schematic cross-section of an example of a rolling bearing;
- Fig. 2: shows a schematic cross-section of an example of a shaft supported rotationally by two rolling bearings;
- Fig. 3: shows a schematic cross-section of a further example of a rolling bearing; and
- Fig. 4: shows a schematic of a wind turbine.

In the Figures, like reference numerals designate like or functionally equivalent elements, unless otherwise indicated.

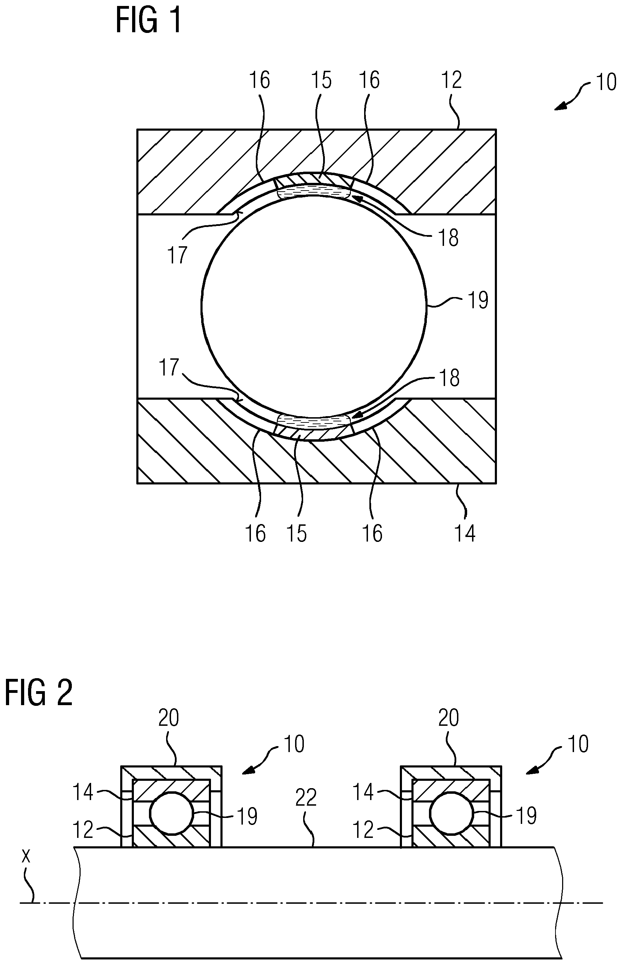

Fig. 1 shows a schematic cross-section of an example of a rolling bearing 10. The rolling bearing 10 is implemented as a ball bearing. The ball bearing 10 comprises an inner race 12 and an outer race 14, which are made from hardened steel. Between the inner race 12 and the outer race 14 a rolling element 19 is arranged. The rolling element 19 is a ball in this case. The ball bearing 10 may further comprise a cage (not shown) for keeping the ball 19.

Both the inner race 12 and the outer race 14 are specifically designed on their sides facing towards each other. In particular, a contact zone 15 is arranged at a position where the ball 19 has contact to the inner race 12 or the outer race 14 in normal operating conditions. The contact zone 15 is preferably worked to be very tough and robust. Next to the contact zone 15, on both sides, a (side) portion 16 is arranged. The portion 16 is arranged in a position where the ball 19 will not have contact at normal operating conditions. The ball bearing 10 is lubricated by using a lubricant 18 such as oil and/or grease.

The portions 16 have a lipophobic surface 17 (reference numerals are only shown on the left side, for better overview). For example, this is provided by a lipophobic coating. Thus, the lubricant 18 is repelled from the lipophobic surface 17. That is, the lubricant does not stick to the lipophobic surface 17. Further, the contact zone 15 comprises a lipophilic coating, which provides lipophilic property to the contact zone 15. Therefore, since the portion 16 is lipophobic and the contact zone 15 is lipophilic, the lubricant 18 stays on the contact zone 15. Even if the lubricant 18 is pushed to the portion 16, for example by the ball 19, the lubricant 17 preferably returns to the contact zone 15. Therefore, the lubricant 17 stays effective in lubricating the ball bearing 10. That is, a friction between the ball 19 and the contact zone 15 of both the inner race 12 and the outer race 14 is reduced. Further, wear of the ball bearing 10 is reduced.

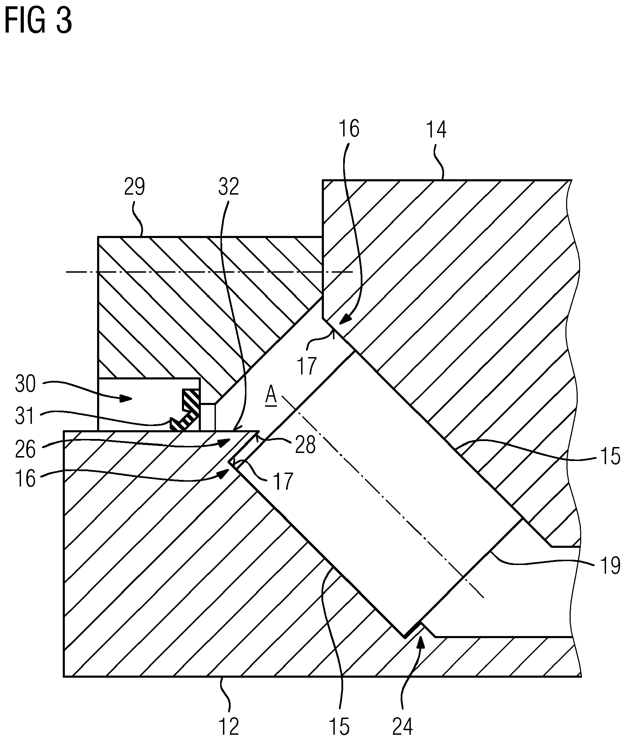

Fig. 2 shows a schematic cross-section of an example of a shaft 22 supported rotationally by two rolling bearings 10, for example the ball bearings 10 described in reference to Fig. 1. In Fig. 2, only the upper half of the shaft is shown. For example, the shaft 22 is a shaft of a rotor of a wind turbine 1 (see Fig. 3) and has a diameter of 2.5 m. The shaft 22 is supported rotationally about a rotation axis X.

The inner races 12 of the rolling bearings 10 are arranged on the shaft 22. The outer races 14 of the rolling bearings 10 are arranged on bearing flanges 20. The bearing flanges 20 is implemented in a housing 4 (see Fig. 3) supporting the rotor and a generator (not shown), for example.

By using the rolling bearings 10, the shaft 22 is supported very smoothly and with very low friction. This is due to the lubricant 18 (see Fig. 1) being kept in the contact zone 15 (see Fig. 1) of the rolling bearings 10 by the specific design of the inner race 12 and the outer race 14, as described with reference to Fig. 1.

Fig. 3 shows a schematic cross-section of a further example of a rolling bearing 10. The rolling bearing 10 has two rows of tapered or cylindrical rolling elements 19. In Fig. 3, only one half of the rolling bearing 10 is shown, the second half is symmetrically identical. The contact zone 15 on the inner race 12 and the outer race 14 has a width corresponding to an effective length of the rolling elements 19, which is the part of the rolling elements 19 that is engaged in contact with the inner race 12 or outer race 14. The rolling elements 19 are, for example, held in place and guided by edges 24, 26 formed on the inner race 12. However, a cage (not shown) may be employed for guiding the rolling elements 19 instead of or additionally to the edges 24, 26.

In Fig. 3, portions 16 having a lipophobic surface 17 arranged on both the inner race 12 and the outer race 14 are shown only on one side of the rolling elements 19. However, such portions 16 may be present also on the other side of the rolling elements 19.

The rolling bearing 10 has a fixing element 29 for fixing a sealing element 31 between the inner race 12 and the outer race 14. That is, a sealing portion 30 is arranged between the inner race 12 and the outer race 14. Next to the sealing portion 30 or the seal 31 is a surface portion 32 of the inner race 12, which has a lipophobic surface, similar to the portion 16. A surface portion 28 of the edge 26 is essentially parallel to a side of the rolling elements 19 and is a guide for the rolling elements 19. Therefore, contact between the rolling elements 19 and the surface portion 28 may take place. The surface portion 28 is therefore lubricated by lubricant 18 (not shown in Fig. 3). Thus, the surface portion 28 is not lipophobic, but preferably has a lipophilic surface.

Between the rolling elements 19, the inner race 12, the outer race 14 and the fixing element 29, a space A is formed. Since the surface portion 32 has a lipophobic surface, lubricant 18 does not stick to it. Thus, lubricant 18 accumulating in space A is reduced. A pressure of lubricant 18 on seal 31 that may be exerted when lubricant 18 is pushed into space A by rolling elements 19 is reduced, since the space A is not pre-occupied by lubricant 18. Further, lubrication of surface portion 28 is enhanced. Other surfaces than described here may be modified to have lipophobic properties.

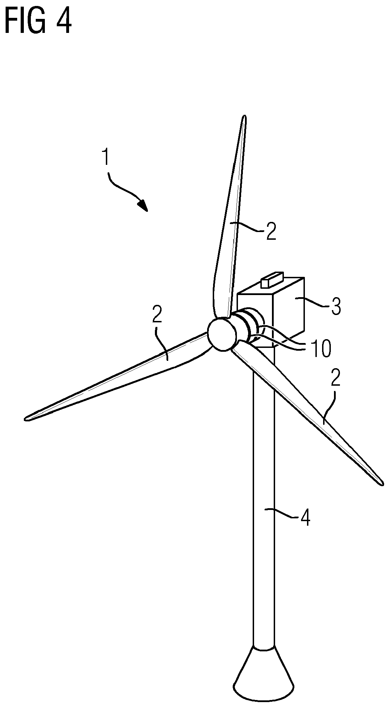

Fig. 4 shows a schematic of a wind turbine 1. The wind turbine 1 comprises a rotor with three blades 2. The blades 2 drive a shaft 22 (see Fig. 2) that is supported rotationally by two rolling bearings 10, for example the rolling bearings 10 described with reference to one of Fig. 1 to 3. The rolling bearings 10 are thus the main bearings of the wind turbine 1. The rolling bearings 10 are fixed with their outer race 14 on a main bearing flange (not shown) arranged in a housing 3 of the wind turbine 1. The shaft 22 drives a generator (not shown) arranged in the housing 3. The housing 3 is arranged on a pole 4. For example, the wind turbine 1 has a high of over 100 m and the rotor of the wind turbine 1 has a diameter of 50 m and up to 250 m.

## Claims

1. A rolling bearing (10), in particular for a wind turbine (1), comprising
an inner race (12),
an outer race (14),
a plurality of rolling elements (19) arranged between the inner race (12) and the outer race (14), and
lubricant (18) for lubricating the rolling bearing (10), wherein
the inner race (12) and the outer race (14) each have a bearing surface with a contact zone (15, 28) in contact with the rolling elements (19),
the bearing surface of the inner race (12) and/or the outer race (14) has a portion (16) having a lipophobic surface (17) for repelling the lubricant (18).

2. The rolling bearing according to claim 1, wherein the portion (16) is directly adjacent to the contact zone (15, 28).

3. The rolling bearing according to claim 1 or 2, wherein the portion (16) comprises a lipophobic material.

4. The rolling bearing according to any one of claims 1 to 3, wherein the lipophobic surface (17) is formed as a coating.

5. The rolling bearing according to any one of claims 1 to 4, wherein the portion (16) comprises a microstructured material, in particular a microporous material.

6. The rolling bearing according to any one of claims 1 to 5, wherein a sealing portion (30) for sealing the rolling bearing (10) is arranged between the inner race (12) and the outer race (14) and a surface portion (32) directly adjacent to the sealing portion (30) has a lipophobic surface for repelling the lubricant (18).

7. The rolling bearing according to any one of claims 1 to 6, wherein the contact zone (15, 28) has a lipophilic surface.

8. The rolling bearing according to any one of claims 1 to 7, wherein the rolling elements (19) have a lipophilic surface.

9. The rolling bearing according to any one of claims 1 to 8, wherein the lubricant (18) is oil.

10. The rolling bearing according to any one of claims 1 to 9, wherein the lubricant (18) is grease.

11. The rolling bearing according to any one of claims 1 to 10, wherein the portion (16) comprises a polymeric coating.

12. The rolling bearing according to claim 11, wherein the polymeric coating is a fluoropolymer coating.

13. The rolling bearing according to any one of claims 1 to 12, wherein the rolling bearing (10) is implemented as a ball bearing, as a cylindrical rolling bearing, as a spherical rolling bearing and/or as a tapered rolling bearing.

14. A wind turbine (1) having a rolling bearing (10) according to any one of claims 1 to 13 as a main bearing and/or as a blade bearing.
